# EUROPÄISCHE PATENTSCHRIFT

(11) **EP 1 057 998 B1**
(45) Veröffentlichungstag und Bekanntmachung des Hinweises auf die Patenterteilung: **19.11.2003**
(21) Anmeldenummer: 00109833.4
(22) Anmeldetag: 10.05.2000
(51) Int. Cl.: F02M 25/12, H01M 8/06, F02B 43/10

(54) **Verfahren zur Erzeugung eines Hilfsbrennstoffes aus dem Betriebskraftstoff einer gemischverdichtenden Brennkraftmaschine, insbesondere auf Kraftfahrzeugen**
Method for producing an auxiliary fuel from the main fuel for a mixture compressing internal combustion engine, specially in vehicles
Procédé de fabrication d'un combustible auxiliaire à partir du combustible principal d'un moteur à combustion interne à compression de mélange, notamment dans un véhicule

(30) Priorität: 29.05.1999 DE 19924777
(43) Veröffentlichungstag der Anmeldung: 06.12.2000
(73) Patentinhaber: Bayerische Motoren Werke Aktiengesellschaft, 80809 München (DE)
(72) Erfinder: Ringler, Jürgen, 86438 Kissing (DE); Fischer, Gregor, 85737 Ismaning (DE)

(56) Entgegenhaltungen:
- US-A- 3 799 125
- US-A- 3 918 412
- US-A- 4 716 859

## Beschreibung

Die Erfindung bezieht sich gemäß dem Oberbegriff des Patentanspruches 1 auf ein Verfahren zur Erzeugung eines Hilfsbrennstoffes aus dem Betriebskraftstoff einer gemischverdichtenden Brennkraftmaschine, insbesondere auf Kraftfahrzeugen, wobei aus dem Betriebskraftstoff mittels einer gesonderten Einrichtung ein in einem Tank bevorratetes Kondensat gebildet wird.

In der deutschen Patentanmeldung 198 53 413 ist die Erzeugung eines Hilfsbrennstoffes aus dem Betriebs-Kraftstoff einer gemischverdichtenden Brennkraftmaschine beschrieben, wobei der als Starthilfe-Kraftstoff dienende Hilfsbrennstoff ein Kondensat aus Dämpfen leichtsiedender Bestandteile des Betriebs-Kraftstoffes ist.

Weiter ist es aus der US 3,918,412 bekannt, zur Reduktion von Emissionen im Abgas einer Brennkraftmaschine zumindest einen Teil eines mitgeführten Betriebs-Kraftstoffes über ein Reformersystem unter Verwendung von Wasserdampf und rückgeführtem Abgas in ein wasserstoffreiches Synthesegas umzuwandeln und dieses der Brennkraftmaschine ansaugseitig zuzuführen. Nachteilig bei dieser Anordnung ist bei einer auf einem Kraftfahrzeug installierten Brennkraftmaschine die Mitführung eines gesonderten Zusatzstoffes, im vorliegenden Fall Wasser für die Dampf-Reformierung.

Der Erfindung liegt die Aufgabe zugrunde, ein Verfahren zur Erzeugung eines Hilfskraftstoffes ohne einen mitzuführenden Zusatzstoff aufzuzeigen, der sowohl für einen temporären Betrieb der Brennkraftmaschine als auch für einen temporären Betrieb oder einem Dauerbetrieb peripherer Einrichtungen der Brennkraftmaschine einsetzbar ist.

Diese Aufgabe ist mit dem Patentanspruch 1 dadurch gelöst, daß mittels eines Reformersystems aus dem aus einem Betriebs-Kraftstoff gewonnenen Kondensat ein wasserstoffreiches Synthesegas für unterschiedliche Verbraucher erzeugt wird.

In vorteilhafter Weise kann das erfindungsgemäß erzeugte Synthesegas zum jeweiligen emissionsreduzierten Betrieb der Brennkraftmaschine in der Start- und Warmlauf-Phase sowie für einen instationären Betrieb dienen, wobei die Brennkraftmaschine bei erreichten vorbestimmten Werten auf den üblichen Betriebskraftstoff umgesteuert ist.

Ein weiterer Vorteil der Erfindung ist darin zu sehen, daß das erfindungsgemäß erzeugte Synthesegas unabhängig von der vorbeschriebenen Verwendung zum Aufheizen eines in einer Abgasanlage der Brennkraftmaschine angeordneten Katalysators auf Anspringtemperatur dient, womit in vorteilhafter Weise eine schnellere Konvertierung erzielt ist.

Schließlich kann das erfindungsgemäße Synthesegas unabhängig von den vorgenannten Verbrauchern zum Betrieb einer als Strom-/Spannungsquelle dienenden Brennstoffzelle dienen, die der Brennkraftmaschine als Hilfseinrichtung zugeordnet ist.

Die Erfindung ermöglicht ferner in vorteilhafter Weise die Kombination der vorgenannten Verbraucher dadurch, daß das Synthesegas erzeugt wird zum temporären emissionsreduzierten Betrieb der Brennkraftmaschine, die mit einer mittels Synthesegas aufheizbaren Katalysator ausgerüstet ist und/oder ferner mit einer mit dem Synthesegas betreibbaren, als Hilfseinrichtung zugeordneten Brennstoffzelle als Strom-/Spannungsquelle ausgerüstet ist, wobei die Brennkraftmaschine beim Start zunächst aus einer Starter-Batterie mit elektrischer Energie versorgt wird.

Mit der erfindungsgemäßen Zuführung eines bevorrateten Kondensates aus leichtsiedenden Kraftstoff-Bestandteilen zu einem Reformersystem kann dieses in vorteilhafter Weise bereits kurz nach dem Start der Brennkraftmaschine aus dem Kondensat-Betriebsstoff bzw. Hilfsbrennstoff gebildetes wasserstoffreiches Synthesegas an die Verbraucher abgeben.

Weiter kann mit dem erfindungsgemäßen Verfahren in vorteilhafter Weise ein Reformer-Kraftstoff mit hohem Anteil an leichtflüchtigen Komponenten des Brennkraftmaschinen-Kraftstoffes an Bord eines Fahrzeuges erzeugt werden, wobei mit der Verwendung hierfür eines an Bord mitgeführten Betriebs-Kraftstoffes eine zusätzliche Infrastruktur entfällt und für den Betreiber des Fahrzeuges in vorteilhafter Weise nur eine Kraftstoffart zu tanken ist. Weiter sind für den erfindungsgemäß versorgten Reformer vereinfachte Reformierungsbedingungen sowie eine verringerte Kohlenstoffbildung als Vorteile zu nennen.

Die Verwendung von Benzin oder Diesel als zu reformierende Kraftstoffe ist dabei aufgrund der bestehenden Infrastruktur, der hohen Energiedichte sowie den hohen Herstellungswirkungsgraden dieser Energieträger von weiterem Vorteil.

Eine Vorrichtung zur Durchführung des erfindungsgemäßen Verfahrens ist in weiteren Unteransprüchen beschrieben.

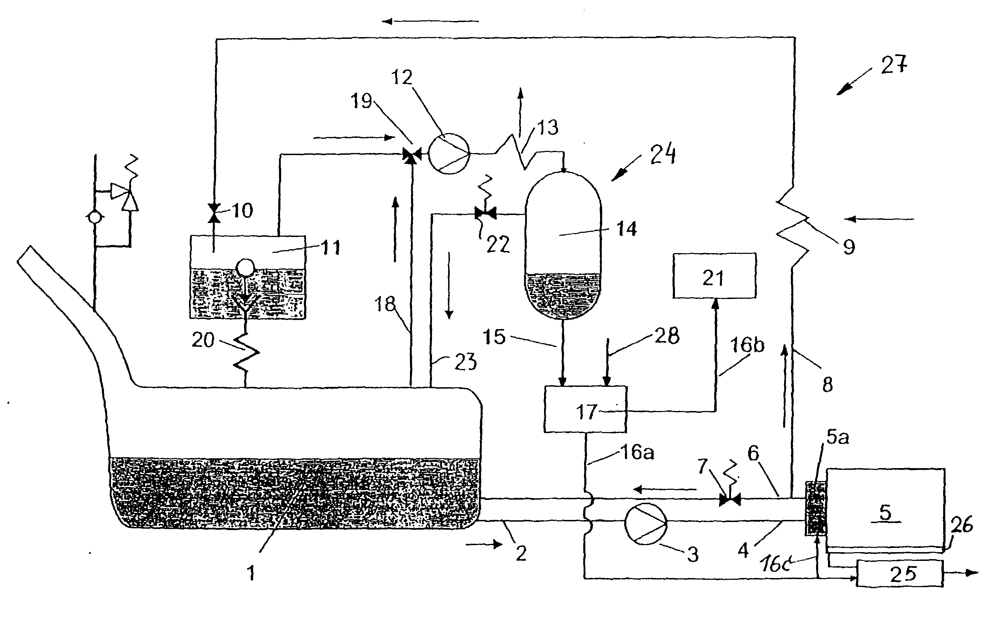

Die Erfindung ist anhand eines in der Zeichnung dargestellten Schema-Bildes beschrieben.

Für ein Verfahren zur Erzeugung eines Hilfsbrennstoffes aus dem in einem Kraftstoff-Vorratsbehälter 1 bevorrateten Betriebs-Kraftstoff einer gemischverdichtenden Brennkraftmaschine 5 ist eine gesonderte Einrichtung 24 vorgesehen, mittels der ein Kondensat aus Dämpfen leichtsiedender Bestandteile des Betriebs-Kraftstoffes erzeugt und in einem Tank 14 bevorratet wird.

Das Verfahren zur Erzeugung eines Hilfskraftstoffes ohne eines Zusatzstoffes ist dahingehend erfindungsgemäß verbessert, daß der Hilfskraftstoff sowohl für einen temporären Betrieb der Brennkraftmaschine 5 als auch für einen temporären Betrieb oder einen Dauerbetrieb peripherer Einrichtungen der Brennkraftmaschine 5 einsetzbar ist.

Erfindungsgemäß wird hierfür vorgeschlagen, daß mittels eines Reformersystems 17 aus dem Kondensat ein wasserstoffreiches Synthesegas für unterschiedliche Verbraucher erzeugt wird.

Als ein erster Verbraucher ist die Brennkraftmaschine 5 mit ihrem Gemischbildungssystem 5 a zu sehen, dem das erfindungsgemäß erzeugte Synthesegas zum jeweiligen emissionsreduzierten Betrieb der Brennkraftmaschine 5 in der Start- und/oder Warmlaufphase sowie für einen instationären Betrieb zugeführt ist.

Als ein weiterer Verbraucher des erfindungsgemäß erzeugten Synthesegases ist ein Katalysator 25 in der Abgasanlage 26 der Brennkraftmaschine 5 anzusehen, dem das Synthesegas zum Aufheizen des Katalysators 25 auf Anspringtemperatur zugeführt ist.

Weiter kommt als Verbraucher für das erfindungsgemäß erzeugte Synthesegase eine Brennstoffzelle 21 in Frage, wobei die der Brennkraftmaschine 5 als Hilfseinrichtung zugeordnete Brennstoffzelle 21 als Strom-/Spannungsquelle für die Brennkraftmaschine 5 dient.

Wie aus der einzigen Zeichnung hervorgeht, können alle vorgenannten Verbraucher bei einer auf einem nicht dargestellten Kraftfahrzeug installierten Brennkraftmaschine 5 vom Reformersystem 17 mit wasserstoffreichem Synthesegas versorgt werden, wobei die Brennkraftmaschine 5 beim Start zunächst aus einer nicht gezeigten Starter-Batterie mit elektrischer Energie versorgt wird.

Die zur Durchführung des erfindungsgemäßen Verfahrens vorgesehene Vorrichtung 27 umfaßt einen für die Brennkraftmaschine 5 vorgesehenen Kraftstoff-Vorratsbehälter 1, aus dem der Betriebs-Kraftstoff über eine Vorlaufleitung 2 und eine Pumpe 3 sowie eine Druckleitung 4 dem Gemischbildungssystem 5 a der Brennkraftmaschine 5 zugeführt ist. Überschüssiger Kraftstoff ist aus dem Gemischbildungssystem 5 a druckgesteuert über eine Rücklaufleitung 6 abgeführt.

Zur Erzeugung eines Kraftstoff-Kondensates in der Vorrichtung 24 ist stromauf eines Druckhalteventils 7 in der Rücklaufleitung 6 mittels einer abzweigenden Leitung 8 Betriebs-Kraftstoff entnommen, dem über einen Wärmetauscher 9 Verdampfungswärme zugeführt ist. Anschließend strömt der erwärmte bzw. erhitzte Betriebs-Kraftstoff über ein Regulierventil 10 in der Leitung 8 einem Dampfabscheider 11 zu, aus dem die Dämpfe leichtsiedender Kraftstoffbestandteile mittels eines Verdichters 12 abgesaugt und einem Kondensator 13 zugeführt sind, der mit dem Tank 14 der Vorrichtung 24 kondensatführend verbunden ist.

Ein im Kondensat-Tank 14 der Vorrichtung 24 anstehender Überdruck kann über eine mit einem Druckventil 22 ausgerüstete Abblaseleitung 23 in den Kraftstoff-Vorratsbehälter 1 abgebaut werden.

Andererseits kann der Kondensat-Tank 14 zusätzlich mit Kraftstoff-Dämpfen dadurch aufgeladen werden, daß der Kraftstoff-Vorratsbehälter 1 von einem Hochpunkt aus über eine ventilgesteuerte Abströmleitung 18 mit dem Verdichter 12 saugseitig verbunden ist.

Weiter ist aus der einzigen Zeichnung ersichtlich, daß der im Dampfabscheider 11 gesammelte Kraftstoff aus schwerflüchtigen bzw. hochsiedenden Bestandteilen über einen kraftstoffkühlenden Wärmetauscher 20 in den Kraftstoff-Vorratsbehälter 1 ventilgesteuert zurückgeführt ist.

Die vorbeschriebene Vorrichtung 27 ist vorteilhaft verwendbar an Bord eines nicht dargestellten Kraftfahrzeuges, wobei das Kondensat aus Dämpfen leichtsiedender Bestandteile des Betriebs-Kraftstoffes während üblicher Betriebsphasen der Brennkraftmaschine 5 unter Verwendung von an Bord erzielter Abwärme erzeugt und im Tank 14 zwischengespeichert ist für das Reformersystem 17, das jeweils in Wirkverbindung steht mit der Gemischbildungsanlage 5 a der Brennkraftmaschine 5 über die Leitungen 16 a und 16 c, sowie über die Leitung 16 a mit einer Vorheizeinrichtung des Abgas-Katalysators 25 der Brennkraftmaschine 5 und schließlich über die Leitung 16 b mit der als Hilfseinrichtung gestalteten Brennstoffzelle 21 als Strom/Spannungsquelle für das Bordnetz.

Der erfindungsgemäße Betrieb eines bekannten Reformersystems 17 mit einem Kondensat aus leichtsiedenden Bestandteilen des für die Brennkraftmaschine 5 zum Betrieb vorgesehenen Kraftstoffes zur Erzeugung eines wasserstoffreichen Synthesegases ergibt die Vorteile vereinfachter Reformierungsbedingungen sowie einer verminderten Gefahr durch Zerstörung des Reformersystems 17 durch Verunreinigungen (Kohlenstoffbildung, Schwefel). Weiter ergibt sich mit der Erzeugung des Hilfsbrennstoffes für das Reformersystem 17 an Bord eines nicht dargestellten Kraftfahrzeuges einerseits der Vorteil, daß bei der Betankung lediglich eine Art von Betriebskraftstoff an Bord zu nehmen ist, und daß andererseits in vorteilhafter Weise keine zusätzliche Infrastruktur notwendig ist.

Für die Reformierung des Kondensats zu wasserstoffreichem Synthesegas kann dem Reformersystem 17 eine flüssige und/oder gasförmige sauerstoffhaltige Verbindung (Luft, Wasserdampf, etc.) über die Leitung 28 zugeführt werden.

## Patentansprüche

1. Verfahren zur Erzeugung eines Hilfsbrennstoffes aus dem Betriebs-Kraftstoff einer gemischverdichtenden Brennkraftmaschine, insbesondere auf Kraftfahrzeugen,
- wobei aus dem Betriebs-Kraftstoff mittels einer gesonderten Einrichtung (24) ein in einem Tank (14) bevorratetes Kondensat gebildet wird,
**dadurch gekennzeichnet,**
- **daß** mittels eines Reformersystems (17) aus dem Kondensat ein wasserstoffreiches Synthesegas für unterschiedliche Verbraucher erzeugt wird.

2. Verfahren nach Anspruch 1, **dadurch gekennzeichnet, daß** das Synthesegas zum jeweiligen emissionsreduzierten Betrieb der Brennkraftmaschine (5) in der Start- und/oder Warmlaufphase sowie für einen instationären Betrieb erzeugt wird.

3. Verfahren nach Anspruch 1, **dadurch gekennzeichnet, daß** das Synthesegas zum Aufheizen eines in einer Abgasanlage (26) der Brennkraftmaschine (5) angeordneten Katalysators (25) auf Anspringtemperatur erzeugt wird.

4. Verfahren nach Anspruch 1, **dadurch gekennzeichnet,**
- **daß** das Synthesegas zum Betrieb einer als Strom-/Spannungsquelle dienenden Brennstoffzelle (21) erzeugt wird, die
- der Brennkraftmaschine (5) als Hilfseinrichtung zugeordnet ist.

5. Verfahren nach den Ansprüchen 1 bis 4, **dadurch gekennzeichnet,**
- **daß** das Synthesegas erzeugt wird zum temporären emissionsreduzierten Betrieb der Brennkraftmaschine (5), die
- mit einem mittels Synthesegas aufheizbaren Katalysator (25) ausgerüstet ist und/oder ferner
- mit einer mit dem Synthesegas betreibbaren, als Hilfseinrichtung zugeordneten Brennstoffzelle (21) als Strom-/Spannungsquelle ausgerüstet ist, wobei
- die Brennkraftmaschine (5) beim Start zunächst aus einer Starter-Batterie mit elektrischer Energie versorgt ist.

6. Vorrichtung zur Durchführung des Verfahrens nach Anspruch 1, wobei
- einen Kraftstoff-Vorratsbehälter (1), aus dem der Betriebs-Kraftstoff über eine Vorlaufleitung (2, 4) pumpengefördert einem Gemischbildungssystem (5 a) zugeführt und überschüssiger Kraftstoff druckgesteuert über eine Rücklaufleitung (6) abgeführt ist,
**dadurch gekennzeichnet, daß**
- in einer Vorrichtung (24) einem stromauf eines Druckhalteventils (7) aus der Rücklaufleitung (6) abgezweigten Betriebs-Kraftstoff über einen Wärmetauscher (9) Verdampfungswärme zugeführt ist und
- der erwärmte bzw. erhitzte Betriebs-Kraftstoff über ein Regulierventil (10) einem Dampfabscheider (11) zuströmt, aus dem
- die Dämpfe leichtsiedender Kraftstoffbestandteile mittels eines Verdichters (12) abgesaugt und einem Kondensator (13) zugeführt sind, der
- mit einem Tank (14) kondensatführend verbunden ist, aus dem
- das Reformersystem (17) mit Kondensat versorgt ist.

7. Vorrichtung nach Anspruch 6, **dadurch gekennzeichnet, daß** der Kondensat-Tank (14) über eine mit einem Druckventil (22) ausgerüstete Abblaseleitung (23) mit dem Kraftstoffvorratsbehälter (1) in Verbindung steht.

8. Vorrichtung nach einem der Ansprüche 7 und 8, **dadurch gekennzeichnet, daß** der Kraftstoff-Vorratsbehälter (1) von einem Hochpunkt aus über eine ventilgesteuerte Abströmleitung (18) mit dem Verdichter (12) saugseitig verbunden ist.

9. Vorrichtung nach Anspruch 6, **dadurch gekennzeichnet, daß** der im Dampfabscheider (11) gesammelte Kraftstoff aus schwerflüchtigen bzw. hochsiedenden Bestandteilen über einen kraftstoffkühlenden Wärmetauscher (20) in den Kraftstoff-Vorratsbehälter (1) ventilgesteuert zurückgeführt ist.

10. Vorrichtung nach einem der Ansprüche 6 bis 9, **gekennzeichnet durch**
- die Verwendung an Bord eines Kraftfahrzeuges, wobei
- das Kondensat mittels bordeigener Abwärme erzeugt und im Tank (14) zwischengespeichert ist für das Reformersystem (17), das
- jeweils gesteuert in Wirkverbindung steht mit einer Gemischbildungsanlage (5 a) der Brennkraftmaschine (5) und
- mit einer Vorheizeinrichtung eines Abgas-Katalysators (25) der Brennkraftmaschine (5), sowie
- mit einer als Hilfseinrichtung gestalteten Brennstoffzelle (21) als Strom-/Spannungsquelle für das Bordnetz.

## Claims

1. A method of generating an auxiliary fuel from the fuel for operating a mixture-compressing internal combustion engine, especially on vehicles,
- wherein a condensate stored in a tank (14) is formed from the operating fuel by means of a separate device (24),
**characterised in that**
- the hydrogen-rich synthesis gas for various loads is generated from the condensate by a reformer system (17).

2. A method according to claim 1, **characterised in that** the synthesis gas is generated for reduced-emission operation of the engine (5) in the starting and/or warming-up phase and for unsteady operation.

3. A method according to claim 1, **characterised in that** the synthesis gas is generated for heating a catalyst (25) disposed in an exhaust system (26) of the engine (5), to the light-off temperature.

4. A method according to claim 1, **characterised in that**
- the synthesis gas is generated for operating a fuel cell (21) serving as a current and voltage source and
- constituting an auxiliary device associated with the engine (5).

5. A method according to claims 1 to 4, **characterised in that**
- the synthesis gas is generated for temporary reduced-emission operation of the engine (5), which
- is equipped with a catalytic converter (25) heatable by synthesis gas and/or
- is also equipped with a current and voltage source in the form of a fuel cell (21) operated with synthesis gas and associated as an auxiliary device, wherein
- the engine (5) on starting is first supplied with electrical energy from a starter battery.

6. A method of working the method according to claim 1, wherein
- a fuel storage container (1) from which the operating fuel is pumped through an outflow line (2, 4) to a mixture-forming system (5a) and excess fuel is discharged under pressure through a return line (6),
**characterised in that**
- heat of evaporation is supplied through a heat exchanger (9) to an operating fuel branched off from the return line (6) upstream of a pressure-maintaining valve (7) and
- the heated operating fuel flows through a regulating valve (10) to a vapour separator (11), from which
- the vapour from low-boiling fuel constituents is sucked away by a compressor (12) and supplied to a condenser (13) which
- is connected for the purpose of conveying condensate to a tank (14) from which
- the reformer system (17) is supplied with condensate.

7. A device according to claim 6, **characterised in that** the condensate tank (14) is connected to the fuel storage container (1) via a blow-off line (23) equipped with a pressure valve (22).

8. A device according to claim 7 and 8, **characterised in that** the fuel storage container (1) is connected on the suction side to the compressor (12) from a high point via a valve-controlled discharge line (18).

9. A device according to claim 6, **characterised in that** the fuel collected in the vapour separator (11) and comprising of difficultly volatile or high-boiling constituents is returned under valve control to the fuel storage container (1) via a heat exchanger (20) for cooling the fuel.

10. A device according to any of claims 6 to 9, **characterised by**
- use on board a vehicle, wherein
- the condensate is produced by waste heat from the vehicle and temporarily stored in the tank (14) for the reformer system (17) which
- is connected for operation in controlled manner to a mixture-forming installation (5a) on the engine (5),
- the device also comprising a preheating device for an exhaust gas catalytic converter (25) on the engine (5) and
- an auxiliary device in the form of a fuel cell (21) for generating current and voltage for the vehicle power system.

## Revendications

1. Procédé pour la production d'un combustible auxiliaire à partir du carburant principal d'un moteur à combustion interne à compression de mélange, en particulier dans un véhicule,
- avec lequel un condensat stocké dans un réservoir (14) est obtenu à partir du carburant principal à l'aide d'un dispositif spécifique (24),
**caractérisé en ce que**
- un gaz de synthèse à forte teneur en hydrogène est généré pour plusieurs récepteurs, à partir du condensat, à l'aide d'un système de reformage (17).

2. Procédé selon la revendication 1,
**caractérisé en ce que**
le gaz de synthèse est généré pour faire fonctionner un moteur à combustion interne (5) avec des émissions réduites en phase de démarrage et de chauffage du moteur, ainsi qu'à l'arrêt.

3. Procédé selon la revendication 1,
**caractérisé en ce que**
le gaz de synthèse est généré pour amener à la température de mise en marche un catalyseur (25) monté sur l'installation d'échappement (26) du moteur à combustion interne (5).

4. Procédé selon la revendication 1,
**caractérisé en ce que**
- le gaz de synthèse est généré pour faire fonctionner une cellule électrochimique (21) servant de source de courant/tension,
- laquelle est associée au moteur à combustion interne (5) en tant que dispositif auxiliaire.

5. Procédé selon les revendications 1 à 4,
**caractérisé en ce que**
- le gaz de synthèse est généré pour faire fonctionner un moteur à combustion interne (5) de façon temporaire avec des émissions réduites,
- lequel moteur est pourvu d'un catalyseur (25) pouvant être chauffé à l'aide du gaz de synthèse et/ou
- d'une cellule électrochimique (21) servant de source de courant/tension en tant que dispositif auxiliaire, et pouvant fonctionner avec le gaz de synthèse, sachant que
- le moteur à combustion interne (5) est d'abord alimenté au démarrage en énergie électrique provenant d'une batterie de démarrage.

6. Dispositif pour la réalisation du procédé selon la revendication 1, comportant
- un réservoir de stockage du carburant (1) dans lequel le carburant principal est pompé via une conduite montante (2, 4) et amené au système de formation du mélange (5a), le carburant excédentaire étant évacué sous pression dans une conduite de retour (6),
**caractérisé en ce que**
- sur un dispositif (24), le carburant principal dérivé de la conduite de retour (6) en amont d'une soupape de maintien de la pression (7) est soumis à une chaleur d'évaporation via un échangeur thermique (9),
- le carburant principal ainsi chauffé étant amené à un séparateur de vapeur (11) via une soupape de régulation (10), à partir duquel
- les vapeurs des composants à bas point d'ébullition du carburant sont aspirées par un compresseur (12) et amenées à un condenseur (13),
- lequel communique avec le réservoir (14) du dispositif pour y fournir le condensat, utilisé pour alimenter le système de reformage (17).

7. Dispositif selon la revendication 6,
**caractérisé en ce que**
le réservoir de condensat ( 14) communique avec le réservoir de stockage du carburant (1) par une conduite de purge (23) équipée d'une soupape de compression (22).

8. Dispositif selon l'une quelconque des revendications 7 ou 8,
**caractérisé en ce que**
le réservoir de stockage du carburant (1) communique, côté admission, avec le compresseur (12) à partir d'un point haut via une conduite d'écoulement (18) pilotée par une soupape.

9. Dispositif selon la revendication 6,
**caractérisé en ce que**
le carburant accumulé dans le séparateur de vapeur (11), constitué de composants faiblement volatils et à haut point d'ébullition, est ramené par un système de soupape dans le réservoir de stockage du carburant (1) via un échangeur thermique (20) utilisé pour le refroidissement du carburant.

10. Dispositif selon l'une quelconque des revendications 6 à 9,
**caractérisé par**
- une utilisation à bord d'un véhicule,
- le condensat est généré à l'aide de la chaleur perdue produite à bord et stocké provisoirement dans le réservoir (14) pour le système de reformage (17), lequel communique :
- avec une installation de formation du mélange (5a) du moteur à combustion interne (5),
- avec un dispositif de préchauffage du catalyseur d'échappement (25) du moteur à combustion interne (5) et, enfin,
- avec la cellule électrochimique (21) utilisée comme dispositif auxiliaire avec une fonction de source de courant/tension pour le réseau embarqué.
